**Europäisches Patentamt**

**European Patent Office**

**Office européen des brevets**

(19)

(11) Publication number : **0 351 827 B1**

(12) # EUROPEAN PATENT SPECIFICATION

(45) Date of publication of patent specification : **17.03.93 Bulletin 93/11**

(51) Int. Cl.$^5$ : **C04B 35/48**

(21) Application number : **89113263.1**

(22) Date of filing : **19.07.89**

(54) **Zirconia-based sintered material and process for producing the same.**

(30) Priority : **20.07.88 JP 182437/88**

(43) Date of publication of application : **24.01.90 Bulletin 90/04**

(45) Publication of the grant of the patent : **17.03.93 Bulletin 93/11**

(84) Designated Contracting States : **DE FR GB**

(56) References cited :
**EP-A- 0 129 188**
**US-A- 4 067 745**
**JOURNAL OF MATERIALS SCIENCE vol. 20, no. 4, April 1985, pages 1178-1184, London, GB; K. TSUKUMA et al.: "Strength, fracture toughness and Vickers hardness of CeO2-stabilized tetragonal ZrO2 polycrystals (Ce-TZP)"**

(73) Proprietor : **SUMITOMO CHEMICAL COMPANY, LIMITED Kitahama 4-chome 5-33 Chuo-ku Osaka 541 (JP)**

(72) Inventor : **Saita, Kenji 10, Sonehigashinocho-2-chome Toyonaka-shi (JP)**
Inventor : **Uchida, Yoshio 13-10, Amakubo-2-chome Tsukuba-shi (JP)**
Inventor : **Fujiwara, Shinji 40-1, Kasuga-2-chome Tsukuba-shi (JP)**
Inventor : **Shinohara, Michio 18-5, Matsushiro-3-chome Tsukuba-shi (JP)**

(74) Representative : **Henkel, Feiler, Hänzel & Partner Möhlstrasse 37 W-8000 München 80 (DE)**

EP 0 351 827 B1

Jouve, 18, rue Saint-Denis, 75001 PARIS

## Description

The present invention relates to a zirconia-based sintered material superior in mechanical strength, hardness and toughness, as well as to a process for producing the sintered material. More particularly, the present invention relates to a zirconia-based sintered material using, as a.stabilizer, cerium oxide (hereinafter referred to as "$CeO_2$" in some cases) and calcium oxide (hereinafter referred to as "CaO" in some cases), which is superior in all of mechanical strength, hardness and toughness and accordingly especially suitable as a mechanical structural material, as well as to a process for producing the sintered material.

It has been well known to use $CeO_2$ or CaO alone as a stabilizer for zirconium oxide (hereinafter referred to as "$ZrO_2$" in some cases).

With respect to the use of $CeO_2$ as a stabilizer, Journal of Americal Ceramic Society, Vol. 33, p. 280 (1950) gives a phase diagram of $CeO_2$-$ZrO_2$. According to this diagram, when the $CeO_2$ content is 18 mol % or more, a tetragonal phase and a cubic crystal phase are present as a stable phase; and when the $CeO_2$ content is less than 18 mol %, a monoclinic phase is present as a stable phase. In the latter case, there is seen a possibility that a tetragonal phase is also present as a metastable phase. Journal of Materials Science, Vol. 17, pp. 255-262 (1982) describes that when $ZrO_2$ containing 7-22 mol % of $CeO_2$ is added to aluminum oxide in an amount of 30% by volume and the mixture is sintered, $ZrO_2$ in the sintered material is in a tetragonal phase and the sintered material gives a maximum fracture toughness of 8 $MPa.m^{1/2}$ when the $CeO_2$ content in $ZrO_2$ is 12 mol %. Journal of Materials Science, Vol. 20, pp. 1178-1184 (1985) gives the measurement data of the mechanical properties of a sintered material of $ZrO_2$ containing 7-16 mol % of $CeO_2$. According to the data, the fracture toughness, flexural strength and hardness of the sintered material depend upon the $CeO_2$ content and grain size of the sintered material. That is, the fracture toughness gives a maximum value of 17 $MPa.m^{1/2}$ when the grain size is 2.5 µm and the $CeO_2$ content is 8-10 mol% (this composition is hereinafter referred to as "composition A"); and the flexural strength gives a maximum value of 800 MPa when the grain size is 1 µm and the $CeO_2$ content is 0-12 mol % (this composition is hereafter referred to as "composition B"). Also according to the measurement data, there can be found no composition which gives high values in both fracture toughness and flexural strength, that is, the composition A gives a flexural strength of 400-500 MPa and the composition B gives a fracture toughness of 7 $MPa.m^{1/2}$; the hardness of the sintered material decreases with decrease in $CeO_2$ content, and the composition A gives a hardness value of 8.5-9.0 GPa and the composition B gives a hardness value of 9.0-9.5 GPa.

With respect to the use of CaO as a stabilizer, it has been generally believed that only a cubic phase is stabilized. However, 2B41 (1986) of the 3rd International Conference on the Science and Technology of Zirconia describes that a sintered material having an average grain size of 0.1 µm obtained by sintering $ZrO_2$ containing 3-9 mol % of CaO at 1,250°C consists of 90-60% by weight of a tetragonal phase, 0-35% by weight of a cubic phase and the balance of a monoclinic phase and that the fracture toughness of the sintered material gives the highest value of 8 $MPa.m^{1/2}$ when the CaO content is about 4 mol %. However, the tetragonal phase becomes unstable when the grain size of the sintered material increases and moreover it is difficult to attain the above grain size (0.1 µm) of the sintered material with the present-day technique of sintering by industrial scale. In the above literature, there are given no data on the flexural strength and density of the sintered material, which makes it impossible to judge the suitability of the sintered material as an industrial material.

Thus, $CeO_2$ gives a high fracture toughness but an insufficient flexural strength, and CaO merely gives a fracture toughness similar to that of $Y_2O_3$. Therefore, though less expensive than $Y_2O_3$, $CeO_2$ and CaO have drawn no attention as a stabilizer for use in mechanical parts requiring a high mechanical strength.

Under the above situation, the present inventors made intensive research in an attempt to obtain a zirconia-based sintered material superior in all of mechanical strength, hardness and toughness by using, as a stabilizer, $CeO_2$ and CaO which are both less expensive than $Y_2O_3$. As a result, the present inventors found that a zirconia-based sintered material superior in all of the above properties can be obtained when $CeO_2$ and CaO are used in combination at particular proportions. This finding has led to the completion of the present invention.

The present invention lies in a zirconia-based sintered material containing 9.5-10.5 mol % of cerium oxide and 0.4-3.0 mol % of calcium oxide.

The present invention further lies in a process for producing a zirconia-based sintered material, which process comprises heating an amorphous material consisting of zirconium oxide containing 9.5-10.5 mol % (in terms of oxide) of cerium oxide and 0.4-3.0 mol % (in terms of oxide) of calcium oxide, to a temperature not lower than the temperature of crystallization of the amorphous material but not higher than 1,200°C, crushing the resulting material to obtain a powder containing a tetragonal crystal phase in an amount of 90% by weight or more, and then subjecting the powder to molding and sintering.

According to the present invention, there can be provided a zirconia-based sintered material having a flexural strength of 700 MPa or more, a fracture toughness of 13 $MPa.m^{1/2}$ or more and a hardness of 10 GPa or more.

The present invention is described in detail below.

The zirconia-based sintered material of the present invention contains 9.5- 10.5 mol % of $CeO_2$, 0.4- 3.0 mol % of CaO with the balance being mostly $ZrO_2$. Preferably 70% by weight or more, more preferably 90% by weight or more of the crystal grains constituting the zirconia-based sintered material are in a tetragonal phase and the balance is in a monoclinic phase, at room temperature. The average size of the crystal grains is 3 $\mu$m or less. When the contents of $CeO_2$ and CaO are outside the above ranges, the resulting sintered material gives a low value in at least one of flexural strength, fracture toughness and hardness, thus making it impossible to obtain a sintered material having desired properties.

In the present invention, the zirconia-based sintered material contains the above mentioned stabilizers, i.e. $CeO_2$ and CaO; its crystal phase is mostly a tetragonal phase at room temperature; the average size of the crystal grains is 3 $\mu$m or less.

When the average crystal grain size exceeds 3 $\mu$m, the proportion of the monoclinic phase in the sintered material increases, which in turn reduces the mechanical strength of the sintered material.

The process for producing the zirconia-based sintered material has no particular restriction as long as there is obtained a sintered material having the above mentioned composition and properties. However, particle size and distribution of raw material, size of agglomerated particles, sintering conditions, etc. are selected so that the relative density of $CeO_2$-CaO-TSZ (tetragonal stabilized zirconia) sintered material to its theoretical density becomes 90% or more (i.e. porosity = 10% or less), preferably 95% or more.

The specific production conditions depend on properties of raw material used, calcinating conditions, grinding conditions, crushing conditions, $CeO_2$-CaO mixing conditions, etc. and accordingly cannot be determined simply. However, most simply, a raw material zirconia powder having an average particle size of 2 $\mu$m or less, preferably 1 $\mu$m or less is used ordinarily so that the resulting sintered material can have an average crystal grain size of 3 $\mu$m or less.

As the method for producing a raw material powder suitable for obtaining the sintered material of the present invention, there can be employed a method which comprises calcinating an amorphous material consisting of oxides or hydroxides of cerium, calcium and zirconium, or their hydrates at a temperature not lower than the crystallization temperature but not higher than 1,200°C and, as necessary, subjecting the calcination product to grinding by a vibration mill or the like to obtain a raw material powder having an average crystal grain size of 1 $\mu$m or less and containing a tetragonal crystal-phase in an amount of 90% by weight or more.

The amorphous material can be formed by adding an alkaline solution to acidic aqueous solutions containing a soluble salt of cerium, a soluble salt of calcium and a soluble salt of zirconium, respectively; preferably by adding an alkaline solution to an acidic aqueous solution containing soluble salts of cerium, calcium and zirconium; most preferably by adding an alkaline solution to an acidic aqueous solution containing a soluble salt of zirconium, at a pH of 3-4 to form an amorphous material, adding thereto an acidic aqueous solution of cerium and calcium, and further adding an alkaline solution to form a desired amorphous material.

As the soluble salt of zirconium, there can be mentioned zirconium oxychloride, zirconium nitrate, zirconium acetate, etc. There can also be used a technical grade reagent of such a salt containing several % of hafnium.

As the soluble salt of cerium, there can be used cerium chloride, cerium nitrate, etc. There can also be used a technical grade reagent of such a salt containing several % of lanthanoid elements (e.g. neodymium).

As the soluble salt of calcium, there can be used calcium chloride, calcium nitrate, etc. There can also be used a technical grade reagent of such a salt containing about several % of strontium. The acid used for obtaining an acidic aqueous solution can be any acid which forms no insoluble salt with any of the above three elements, and is preferably hydrochloric acid or nitric acid. As the alkaline solution, there can be used a solution of sodium hydroxide or, potassium hydroxide, ammonia water, etc.

The amorphous material is such a material whose amorphism can be confirmed by X-ray diffraction and which can be crystallized, when heated, to form a tetragonal phase at 450°C. In this case, a higher heating temperature gives larger crystal grain sizes. A heating temperature higher than 1,200°C gives too large grain sizes, making it impossible to obtain a satisfactory molded material in the subsequent molding step.

The thus produced raw material powder is molded by a known molding method (e.g. mechanical pressing, isostatic pressing, extrusion molding, injection molding) or a combination of some of these molding methods. The molded material is heated to 1,350 - 1,750°C in a heating furnace and then fired for several hours (e.g. 1 - 5 hours) to obtain a zirconium-based sintered material of the present invention.

In the above, the raw materials and stabilizers used in the process of the present invention for producing a zirconia-based sintered material have been described. However, these materials and stabilizers are main components and it is possible to use, besides them, a sintering aid and/or a grain growth inhibitor both known in the art, such as silica, alumina, titania, kaolin, mullite or the like, in such an amount that the effects of the present invention are not impaired.

As described in detail above, the present invention provides a zirconia-based sintered material which uses, as a stabilizer, a combination of $CeO_2$ and $CaO$ (both are less expensive than $Y_2O_3$) at particular proportions and which is strikingly improved in all of mechanical strength, hardness and toughness, as compared with a zirconia-based sintered material containing 3 mol % of $Y_2O_3$ or a zirconia-based sintered material containing $CeO_2$ or $CaO$ alone. The sintered material of the present invention is very useful as a mechanical structural material for cutting tools, extrusion or drawing dies, engine parts, bearing balls, balls for ball-point pens, mechanical seals, shafts, nozzles, pistons, etc. and accordingly has a very high industrial value.

The present invention is described in more detail below by way of Examples. However, the present invention is in no way restricted to these Examples.

Examples 1-4 and Comparative Examples 1-4

An aqueous zirconium oxychloride solution and ammonia water were mixed at pH 4 to precipitate amorphous zirconium oxide. The amorphous zirconium oxide was collected by filtration and then dispersed in water. To the dispersion was added an aqueous solution of cerium nitrate and calcium chloride so that a raw material composition shown in Table 1 could be achieved. To the mixture was dropwise added an aqueous sodium hydroxide solution with stirring until a pH of 13 was obtained, to precipitate an amorphous material. The amorphous material was collected by filtration, washed by water, dried and crushed to obtain a powder having a crystallization temperature of 490-550°C. The powder was calcined at 1,100°C for 2 hours, ground by a vibration mill for 2 hours and by a wet type ball mill for 2 hours, dried and crushed to obtain various powders each having a BET specific surface area of 3 $m^2/g$ and an average grain size of 0.8 $\mu$m. All of these powders contained a tetragonal phase in an amount of 90% by weight or more.

Each of the raw material powders was subjected to a isostatic press method (48100 kPa = 1 $ton/cm^2$) to obtain a molded material of 35 mm x 5 mm x 5 mm. The molded material was fired at 1,500°C or 1,550°C for 2 hours to obtain various sintered materials. Each of the sintered materials was measured for crystal phases, flexural strength, fracture toughness, hardness and average crystal grain size. The results are shown in Table 1.

In Comparative Examples, using the raw materials giving a composition shown in Table 1, raw material powders were obtained in the same manner as in the above Examples. Each of the powders had an average grain size of 0.8 $\mu$m and contained a tetragonal phase in an amount of 90% by weight.

Each of the raw material powders was subjected to a isostatic press method (98100 kPa = 1 $ton/cm^2$) to obtain a molded material of 35 mm x 5 mm x 5 mm. The molded material was fired at 1,550°C for 2 hours to obtain various sintered materials. Each of the sintered materials was measured for crystal phases, flexural strength, fracture toughness, hardness and average crystal grain size. The results are shown in Table 1.

In the above Examples and Comparative Examples, crystal phases were measured by X-ray diffraction and hardness were measured by the V.I. (Vickers identor) (measurement conditions: load = 30 kg/15 sec, Young's modulus E = 1.86 x $10^{15}$ $MN/m^2$); flexural strength was measured by indentation fracture method by Evans et al. (span length = 30 mm, strain rate = 0.5 mm/min). Grain size of sintered material was measured by the line intersection method using the photomicrographs taken by a scanning electron microscope.

Table 1

| | | Raw material composition (mol %) | | | Sintering temperature (°C) | Properties of sintered material | | | | |
|---|---|---|---|---|---|---|---|---|---|---|
| | | ZrO$_2$ | CeO$_2$ | CaO | | Tetragonal phase (wt. %) | Average crystal grain size (μm) | Flexural strength (MPa) | Fracture toughness (MPa.m$^{1/2}$) | Hardness (GPa) |
| Examples | 1 | 87.5 | 10.0 | 2.5 | 1550 | 90 | 1.0 | 850 | 15.4 | 10.9 |
| | 2 | 88.5 | 10.0 | 1.5 | 1550 | 94 | 1.0 | 740 | 15.5 | 10.2 |
| | 3 | 89.5 | 10.0 | 0.5 | 1550 | 96 | 0.8 | 700 | 15.8 | 10.0 |
| | 4 | 87.5 | 10.0 | 2.5 | 1500 | 79 | 0.8 | 850 | 13.0 | 11.1 |
| Comparative Examples | 1 | 86.5 | 10.0 | 3.5 | 1550 | 22 | 1.5 | 380 | 6.6 | 9.7 |
| | 2 | 86.5 | 11.0 | 2.5 | 1550 | 83 | 1.0 | 410 | 10.9 | 10.7 |
| | 3 | 88.5 | 9.0 | 2.5 | 1550 | 45 | 1.0 | 300 | 9.5 | 8.9 |
| | 4 | 90.0 | 10.0 | 0 | 1550 | 96 | 1.0 | 600 | 17.0 | 9.5 |

## Claims

1.  A zirconia-based sintered material containing 9.5 - 10.5 mol % of cerium oxide and 0.4 - 3.0 mol % of calcium oxide.

2.  A zirconia-based sintered material according to Claim 1, wherein 70% by weight or more of the crystal grains constituting the sintered material is in a tetragonal phase at room temperature and the average size of the crystal grains is about 3 $\mu$m or less.

3.  A zirconia-based sintered material according to Claim 2, wherein 90% by weight or more of the crystal grains constituting the sintered material is in a tetragonal phase at room temperature.

4.  A process for producing a zirconia-based sintered material, which process comprises heating an amorphous material consisting of zirconium oxide containing 9.5 - 10.5 mol % (in terms of oxide) of cerium oxide and 0.4 - 3.0 mol % (in terms of oxide) of calcium oxide, to a temperature not lower than the temperature of crystallization of the amorphous material but not higher than 1,200°C, crushing the resulting material to obtain a powder containing a tetragonal phase in an amount of 90% by weight or more, and then subjecting the powder to molding and sintering.

5.  A process according to Claim 4, wherein the amorphous material is obtained by adding an alkaline solution to an acidic aqueous solution of a soluble salt of zirconium at a pH of 3 - about 4, mixing the resulting mixture with an acidic aqueous solution of cerium and calcium, and further adding an alkaline solution.

6.  A process according to Claim 4, wherein the temperature of sintering is 1,350 - 1,750°C.

## Patentansprüche

1.  Sintermaterial auf Zirkonoxidbasis mit 9,5 bis 10,5 Mol-% Ceroxid und 0,4 bis 3,0 Mol-% Calciumoxid.

2.  Sintermaterial auf Zirkonoxidbasis nach Anspruch 1, wobei 70 Gew.-% oder mehr der das Sintermaterial bildenden Kristallkörnchen bei Raumtemperatur in einer tetragonalen Phase vorliegen und die Durchschnittsgröße der Kristallkörnchen etwa 3 $\mu$m oder weniger beträgt.

3.  Sintermaterial auf Zirkonoxidbasis nach Anspruch 2, wobei 90 Gew.-% oder mehr der das Sintermaterial bildenden Kristallkörnchen bei Raumtemperatur in einer tetragonalen Phase vorliegen.

4.  Verfahren zur Herstellung eines Sintermaterials auf Zirkonoxidbasis durch Erwärmen eines amorphen Materials, bestehend aus Zirkonoxid mit 9,5 bis 10,5 Mol-% (ausgedrückt als Oxid) Ceroxid und 0,4 bis 3,0 Mol-% (ausgedrückt als Oxid) Calciumoxid auf eine Temperatur nicht unterhalb der Kristallisationstemperatur des amorphen Materials, jedoch nicht oberhalb 1200°C, Zerkleinern des erhaltenen Materials zu einem Pulver mit einer tetragonalen Phase in einer Menge von 90 Gew.-% oder mehr und anschließendes Ausformen und Sintern des Pulvers.

5.  Verfahren nach Anspruch 4, wobei das amorphe Material durch Zugabe einer alkalischen Lösung zu einer sauren wäßrigen Lösung eines löslichen Zirkonsalzes bei einem pH-Wert von 3 bis etwa 4, Vermischen der erhaltenen Mischung mit einer sauren wäßrigen Lösung von Cer und Calcium und schließlich Zugabe einer alkalischen Lösung zubereitet wird.

6.  Verfahren nach Anspruch 4, wobei die Sintertemperatur 1350 bis 1750°C beträgt.

## Revendications

1.  Matériau fritté à base de zircone, contenant de 9,5 à 10,5% en moles d'oxyde de cérium et de 0,4 à 3,0% en moles d'oxyde de calcium.

2.  Matériau fritté à base de zircone selon la revendication 1, dans lequel 70% en poids ou plus des grains cristallins constituant le matériau fritté sont dans une phase tétragonale à la température ambiante et la grosseur moyenne des grains cristallins est d'environ 3 μm ou moins.

3. Matériau fritté à base de zircone selon la revendication 2, dans lequel 90% en poids ou plus des grains cristallins constituant le matériau fritté sont dans une phase tétragonale à la température ambiante.

4. Procédé de préparation d'un matériau fritté à base de zircone, comprenant les étapes consistant à chauffer une matière amorphe composée d'oxyde de zirconium contenant 9,5 à 10,5% en moles (en termes d'oxyde) d'oxyde de cérium et 0,4 à 3,0% en moles (en termes d'oxyde) d'oxyde de calcium, à une température non inférieure à la température de cristallisation de la matière amorphe, mais non supérieure à 1200°C, à broyer la matière résultante pour obtenir une poudre contenant une phase tétragonale dans une proportion de 90% en poids ou plus, puis à soumettre la poudre au moulage et au frittage.

5. Procédé selon la revendication 4, dans lequel la matière amorphe est obtenue en ajoutant une solution alcaline à une solution aqueuse acide d'un sel soluble de zirconium à un pH de 3 à 4, en mélangeant le mélange résultant avec une solution aqueuse acide de cérium et de calcium, et en ajoutant encore une solution alcaline.

6. Procédé selon la revendication 4, dans lequel la température de frittage est comprise entre 1350 et 1750°C.